(19) Europäisches Patentamt
European Patent Office
Office européen des brevets

(11) Publication number: **0 010 802**
**B1**

(12) **EUROPEAN PATENT SPECIFICATION**

(45) Date of publication of patent specification: **29.12.82**

(51) Int. Cl.³: **G 01 N 27/40**

(21) Application number: **79200599.3**

(22) Date of filing: **18.10.79**

(54) **Potentiometric devices for the detection of a single halide ion species.**

(30) Priority: **31.10.78 US 956526**
**31.10.78 US 956527**

(43) Date of publication of application:
**14.05.80 Bulletin 80/10**

(45) Publication of the grant of the patent:
**29.12.82 Bulletin 82/52**

(84) Designated Contracting States:
**BE CH DE FR GB IT SE**

(56) References cited:
DE - A - 2 431 288
DE - A - 2 626 277
DE - A - 2 722 617
US - A - 3 563 874

(73) Proprietor: **EASTMAN KODAK COMPANY**
**343 State Street**
**Rochester, New York 14650 (US)**

(72) Inventor: **Kim, Sang Hyung**
**Kodak Park**
**Rochester, New York (US)**
Inventor: **Battaglia, Charles Joseph**
**Kodak Park**
**Rochester, New York (US)**
Inventor: **Secord, Denise Schoonover**
**Kodak Park**
**Rochester, New York (US)**

(74) Representative: **Parent, Yves**
**Kodak-Pathé Département des Brevets et Licences 30, rue des Vignerons B.P. 60**
**F-94302 Vincennes Cedex (FR)**

**EP 0 010 802 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Potentiometric devices for the detection of a single halide ion species

The present invention relates to potentiometric devices for the selective detection of a single halide ion species, and specifically to halide ion-sensitive devices such as electrodes which can be used to determine the concentration of certain halide ions in a solution in a short period of time without significant interference from other halide ions or other materials, such as uric acid, which may also be present in the solution.

Ion-sensitive electrodes comprising a layer of silver in electrochemical contact with a layer of silver halide (especially silver chloride) are well known. Descriptions of silver/silver chloride electrodes may be found, for example, in U.S. Patents 3,502,560; 3,591,482; and 3,856,649, and in *Research Disclosure* No. 16113, Volume 161, September, 1977.

Such electrodes can be useful as reference electrodes and also as sensing electrodes for detecting chloride ions in aqueous solutions. However, in measuring chloride ion activity with a silver/silver chloride electrode in order to determine chloride ion concentration in a solution, significant errors or bias in the determination can result owing to the presence in the solution of other materials, e.g. bromide ions, uric acid or other low molecular weight materials, which may come into contact with the electrode.

U.S. Patent 3,591,482 describes a silver/silver chloride electrode which is overcoated with a layer of alkyl methacrylate to protect the electrode from deterioration, while permitting passage of chloride ions.

R. P. Buck, "Virtues and Limitations of ISE for Measurements in Biological Systems", plenary lecture, *Proc. Analyt. Div. Chem. Soc.*, November, 1977, pages 332 through 334, discusses ion-selective electrodes containing various surface coatings.

U.S. Patent 3,979,274 recognizes that an enzyme electrode, such as a platinum electrode, which measures hydrogen peroxide activity, can encounter interference from substances such as uric acid or other low molecular weight materials. It describes a laminated overcoat comprising two layers bonded together by an enzyme preparation to permit passage of hydrogen peroxide but prevent passage of other materials. One of the layers may comprise a cellulose ester, silicone rubber, or methyl methacrylate.

Other patents relating to overcoated electrodes include, for example, U.S. 3,694,163 and U.S. 3,912,614.

A need remains, however, for a sensing device for the detection of halide ions in solution which utilizes an overlayer to prevent interference by other materials, but wherein the overlayer is relatively thin (e.g., 1 to 8 microns), so that an accurate analysis could be carried out within a relatively short period of time (e.g., within 5 minutes) after the device is brought into contact with the solution to be analyzed.

The present invention provides a potentiometric device for the detection of halide ions which is substantially free from interference by one or more low molecular weight species, such as $Br^{\ominus}$ (i.e. where chloride is the halide ion being detected), uric acid, etc, such a device having the desirable capabilities noted above; i.e., determinations of halide ion concentration (e.g., chloride concentration) in solutions such as blood serum, for example, within 5 minutes after contacting such a device with a portion of such a solution.

Such a device can include means for making potentiometric measurements related to halide ion concentrations, such as an electrode comprising a support having a silver layer superposed thereon, for example, an electrode of the type described in *Research Disclosure* No. 16113, Volume 161, September, 1977 or DEOS 2,722,617. The silver layer is in electrochemical contact with a layer of silver halide (e.g., silver chloride) having superposed thereon a halide ion-permeable overlayer.

Alternatively, a device provided by the present invention includes an n- and p-type silicon support having a silicon dioxide layer superposed thereon. The silicon dioxide layer is in electrochemical contact with a layer of silver halide (e.g., silver chloride) having the overlayer permeable to a given halide ion species superposed thereon.

The overlayer employed in the invention will meet certain diffusion coefficient and permeability parameters that vary according to the desired thickness of the overlayer. For example, as the layer thickness increases, the diffusion coefficient must increase, and as the layer thickness decreases, the permeability must decrease. Thus, there is provided an overlayer permeable to a single halide ion species, which is from 1 to 8 microns thick (dry thickness), has a diffusion coefficient of at least $2.5 \times 10^{-10}$ $cm^2$/sec with respect to the halide ions to be detected, and has a permeability of less than $2 \times 10^{-8}$ $cm^2$/sec to materials which could interfere with the accurate detection of the halide ions. These properties are determined by known techniques, such as radio tracers, conductivity, ion-selective electrodes, etc.

Electrode elements of the type described in *Research Disclosure* No. 16113, Vol. 161, September, 1977, or DEOS 2,722,617, can be prepared using a number of well-known techniques which include, by way of example, dipping a layer of silver such as a wire, foil or supported thin layer of silver into a solution of molten silver halide. According to a preferred embodiment, the silver-silver

halide electrode is produced by vacuum-depositing silver onto a suitable support, preferably an insulating polymeric film, and then chemically converting a surface stratum of the silver layer to silver halide. Generally, techniques for chemically converting metal to metal halide involve exposure or contact of the surface of the metal, in this case silver, with a solution of a salt of the halide to be formed for a time and at a temperature sufficient to cause the desired conversion. Typical conditions for this sort of chemical conversion are well known, and examples of simple and preferred techniques may be found in aforementioned *Research Disclosure* Volume 161 or DEOS 2,722,617. Other useful techniques for preparing such electrodes are described in U.S. Patents 3,591,482; 3,502,560; and 3,806,439. Although the teachings of all of these references are directed primarly to the preparation of wire electrodes, the electrodes described herein may also be constructed on thin films of polymeric support, as described in the aforementioned *Research Disclosure* Volume 161 or DEOS 2,722,617. Alternatively, a discrete layer of silver chloride may be coated over the silver layer, so long as appropriate electrochemical contact between the silver and the silver chloride is achieved.

Although it is possible to obtain the silver-silver halide interface with substantially any ratio of silver layer to halide layer thickness, in a preferred embodiment which assures a sufficiently dense layer of silver halide, the halide layer has a thickness equal to at least 10 percent of the overall thickness of the silver layer. According to an especially preferred embodiment, from 10 to 20 percent of the thickness of the silver layer is converted to silver chloride using chemical conversion techniques.

Preferred halide ion-permeable overlayer compositions of the invention are selected from:

(a) cellulose esters [including mixed esters, e.g. cellulose acetate butyrate, cellulose acetate propionate, hydrolyzed cellulose acetate butyrate (preferably having from 6.4 to 8.3% hydroxyl groups)];
(b) polymers polymerized from 45 weight percent to 100 weight percent of at least one monomer having the structure:

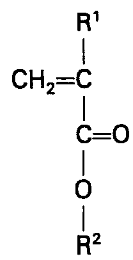

where
$R^1$ is hydrogen or methyl;
$R^2$ is hydrogen, —$R^3$—OH or

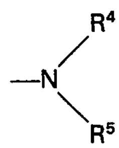 ;

$R^3$ is alkyl of 1—5 carbon atoms; and
$R^4$ and $R^5$ are independently selected from the group consisting of hydrogen and alkyl of 1—5 carbons atoms; and

(c) mixtures of gelatin, silver halide/gelatin emulsion, and an acid.

Some specific examples of preferred compositions which meet the aforementioned preferred diffusion and permeability criteria include:

(a) cellulose acetate having from 36.5 weight percent to 40.0 weight percent acetyl content;
(b) poly(acrylamide-co-methacrylic acid) (weight ratio: 45/55);
(c) poly(methylacrylamide-co-methacrylic acid) (weight ratio: 50/50);
(d) poly(methacrylamide - co - 2 - hydroxyethylmethacrylate - co - methacrylic acid - co - 2 - acetoacetoxyethylmethacrylate) (weight ratio: 28/28/34/10);
(e) poly(methacrylic acid);
(f) poly(acrylic acid); and
(g) poly(2-hydroxyethylacrylate).

A particularly useful and most preferred composition for an overlayer of the present invention is cellulose acetate. In order to meet the diffusion and permeability criteria described above, cellulose acetates should have from 36.5 percent to 40.0 percent acetyl content by weight and the thickness of the overlayer should be from 7.6 to 1.3 microns, depending upon the percent acetyl content. Cellulose

acetates having an acetyl content below 36.5 percent tend to dissolve in aqueous solutions, while those having an acetyl content above 40 percent have too much hydrophobicity to provide desirable, relatively short, response times. An empirical formula for determining the preferred thickness in microns of a cellulose acetate overlayer, depending upon its acetyl content; is: preferred thickness=73.3—(1.8)x(percent acetyl content). An advantage of these cellulose acetates is that they are capable of rapidly carrying out detection of halide ions, e.g., within 5 minutes or less.

It should be noted, however, that when a cellulose ester, e.g. cellulose acetate, is employed as the halide ion-permeable overlayer, some change may occur upon aging which may result in a substantial extension of the response time of the electrode (i.e., the time required by the electrode to reach a steady, readable state).

Thus, where shelf-life is an important consideration and a cellulose ester is the overlayer of choice, it may be advantageous to extend the shelf-life by adding to the cellulose ester overlayer a polyol having from two to six hydroxyl groups.

Useful polyols include diols, triols, polyethylene glycols, alkoxy polyethylene glycols and polypropylene glycols. Among the diols, the preferred materials have chain lengths of from 4 to 10 carbon atoms. Examples of useful diols include ethylene glycol, 1,2-propanediol; 1,3-butanediol; 1,5-pentanediol; 2,5-hexanediol; 2-ethyl-1,3-hexanediol; 1,7-heptanediol; 1,8-octanediol; 1,10-decanediol; and 1,14-tetradecanediol. Useful triols include glycerol; 1,3,6-hexanetriol; and 1,2,4-butanetriol. Among the polyethylene glycols, those having molecular weights between 100 and 6,000 have been found useful. Most preferred are those having molecular weights of between 200 and 600. Alkoxypolyethylene glycols such as methoxy polyethylene glycol are also useful. Among the polypropylene glycols, those having molecular weights below 1,100 are especially preferred. The concentration of polyol which is used will vary broadly depending upon such factors as the ester used to form the layer, layer thickness, etc.; however, polyol concentrations of between 1 and 15 percent by weight of the layer have been found most useful and practical and are therefore preferred.

The specific method of application of the overlayers of the present invention is, of course, largely dependent upon the physical shape of the underlying Ag/AgCl or other electrode. Thus, when the Ag/AgCl electrode is a wire electrode, the simplest method for applying the overlayer may be dipping or spraying. When the underlying electrode is in a planar format, as described in *Research Disclosure*, Volume 161 referred to above, it is advantageous to coat the overlayer according to techniques well known to those skilled in the coating art, although other techniques, such as laminating, can be used, also.

When using a coating mode of application, the overlayer is generally applied by forming a solution of the constituent composition in a suitable solvent, applying the solution to the electrode, and then driving off the solvent under drying conditions.

Useful solvents for water-insoluble polymers, such as cellulose acetates, include acetone, methyl ethyl ketone, methyl acetate, acetone mixtures of methanol, 2-ethoxy ethanol, or diacetone alcohol, and dichloromethane: methanol (90:10 by weight).

Surfactants may also be included in the solutions, as appropriate, to achieve good coating characteristics, such as Triton X-100 (commercially available from Rohm and Haas Co.).

As mentioned above, in another potentiometric device of the present invention, a silver halide layer can be vacuum deposited on a semiconductor substrate, such as silicon dioxide/silicon to prepare a field effect potentiometric device. Overlayers of the type described in this application are useful for application to field effect transistors, e.g. ion-selective field effect transistors, sensitive to chloride or bromide ion, as described by Bergveld (P. Bergveld, IEEE Trans., Biomed., Eng., 17, 70 [1970], and P. Bergveld, IEEE Trans., Biomed., Eng., 19, 342 [197]), and R. P. Buck et al. *Analytical Chemistry,* Volume 49, No. 14, December, 1977, page 2315. Such field effect transistors, in the case of bromide- or chloride-selective transistors, can comprise a layer of an insoluble salt, such as silver bromide or silver chloride coated over a silicon dioxide layer to form a gate in contact with a silicon surface appropriately doped to define a p- or n-channel upon application of a sample under test to the silver halide layer.

The halide ion-permeable overlayers described herein are coated over the silver halide layers to inhibit the effect of interfering ions which may be present in the solution under assay. Particularly, the halide ion-permeable overlayers of the invention reduce interference in determinations of concentration of particular halide ions. Interference from other halides (e.g., from bromide when chloride is being measured, etc.), as well as interference from uric acid, sulfur-containing and nitrogen-containing compounds, other low molecular weight compounds, and large molecules, such as proteins, can be significantly reduced or completely eliminated by use of such overlayers.

The overlayers also provide physical protection against abrasion of fragile silver halide layers.

In the following Examples, planar, dry-operative Ag/AgCl electrodes were prepared as described in the aforementioned *Research Disclosure*, Volume 161 or DEOS 2,722,617, and then overcoated with various halide ion-permeable overlayer compositions from a solvent, in some cases containing a small amount of a surfactant.

More specifically, in those Examples where the preferred cellulose esters were employed, the following procedure was used:

The Ag/AgCl electrodes were prepared by vacuum depositing a layer of silver onto a poly(ethylene

terephthalate) support. The surface of this silver layer was converted to AgCl by immersion in a bath of dichromic acid and potassium chloride at a temperature of about 22°C for a period of 30 seconds.

Cellulose ester was dissolved in a suitable solvent, such as acetone or methylethylketone or the like, at 10 percent by weight. The solution was diluted to about 6 percent and a polyol (1 to 15 percent by weight of cellulose ester) was added. Small amounts of surfactant can also be added as a coating aid. The solutions were then coated at appropriate coating conditions. Unless otherwise stated, the coating conditions were: dew point 28°F (−2.2°C), dry bulb temperature 110°F (43.3°C) for 8 minutes, 130°F (54.4°C) for 4 minutes and 180°F (82°C) for 4 minutes.

Performance testing was done in both differential and absolute modes.

In the differential mode, matched Ag/AgCl electrodes were tested using fiber bridges which connect reference and test solutions, as described in *Research Disclosure* No. 15767, Volume 157, May, 1977. Test solutions comprised stock human blood serum pools adulterated with NaBr, KBr, sodium urate or uric acid. The measured potential difference between adulterated and unadulterated human serum (Δemf) was taken as a measure of the bias in mV and expressed as percent bias, which equals Δemf times [−4], assuming a consistent Nernstian response. A three-minute time was chosen as the endpoint.

In the absolute mode, the overcoated Ag/AgCl electrodes were tested by direct potentiometry in a cell using a Beckman sodium ion-sensitive glass electrode or a microreference electrode, MI-401 (Microelectronics, Inc.), as the reference. Test solutions comprised stock human blood serum pools adulterated with either KBr or uric acid. The difference in measured potential between adulterated and unadulterated human serum (Δemf) was taken as a measure of the bias in mV. The response time of the electrode was chosen as that time at which the potential reached a steady state, i.e., drifted at a constant rate.

All tests were performed at ambient conditions (35 to 50 percent RH; 21 to 23°C), unless otherwise stated.

Example 1

Effectiveness of various overlayer compositions in reducing $Br^{\ominus}$ and uric acid interferences

A series of chloride ion-selective electrodes was prepared as described above, each electrode having an overlayer comprising a different composition, except for the control, which contained no overlayer. The electrodes were then tested in the differential mode with adulterated and unadulterated human blood serum pools. Measurements were made 3 minutes after the serum solution contacted the overlayer. The results, as shown in Table I, indicate that all of the overlayer compositions tested reduce interference by bromide and uric acid. Cellulose acetate (having from 36.5 percent to 40.0 percent acetyl content) was the most effective in this respect.

TABLE I

| Composition of electrode overlayer | Thickness of overlayer (microns) | Bias (percent) 0.5 mM $Br^{\ominus}$ | Bias (percent) 1.0 mM Uric acid |
|---|---|---|---|
| Bare control electrode (no overlayer) | 0 | 25 | 8 |
| poly(2-hydroxyethylacrylate) | 7.5 | 21 | 2 |
| poly(acrylic acid) | 2.5 | 17 | 2 |
| poly(methacrylic acid) | 2.5 | 12 | 1 |
| poly(methacrylamide-co-2-hydroxyethylmethacrylate-co-methacrylic acid-co-2-aceto-acetoxyethylmethacrylate) (28/28/34/10) | 5 | 12 | <1 |
| poly(methacrylamide-co-methacrylic acid) (50/50) | 5 | 10 | <1 |
| poly(acrylamide-co-methacrylic acid) (45/55) | 5 | 6 | 1 |
| Cellulose acetate (36.5 percent—40 percent acetyl) | 1—8 | <1—5 | <1 |

Various polymeric overlayers that do not meet the diffusion and permeability criteria described above have been likewise treated, and no significant reduction in bias was found. These include polyvinyl acetate, agarose, polyvinyl alcohol and poly(vinyl pyrrolidone).

Example 2

Effectiveness of Gel/AgCl/acid overlayer in reducing $Br^{\ominus}$ and uric acid interferences

Two electrodes were prepared as in Example 1, one being a bare control without an overlayer, and the other having an overlayer comprising a mixture of:

(1) 5 g/$m^2$ of deionized gelatin hardened with 0.075 g/$m^2$ of bis(vinylsulfonylmethyl)ether;
(2) 5 g/$m^2$ of AgCl emulsion comprising a 1:1 by weight mix of AgCl having a grain size of 0.15 to 0.6 micron at pAg 4 to 5.6 and gelatin;
(3) 7.5 mM/$m^2$ of potassium acid phthalate (potassium dihydrogen phosphate or nitric acid in similar concentration can also be used); and
(4) 0.025 g/$m^2$ of Triton X-100® surfactant.

This mixture was coated from solution at pH 4.7. Differential mode testing of the two electrodes was carried out on adulterated and unadulterated human blood serum pools. The results shown in Table II indicate that the gel/AgCl/Acid overlayer causes some reduction of $Br^{\ominus}$ interference and significant reduction of uric acid interference.

TABLE II

| Composition of electrode overlayer | Bias (percent) 0.1 mM $Br^{\ominus}$ | 1.0 mM uric acid |
|---|---|---|
| Bare control | 8 | 10 |
| gel/AgCl/acid | 3 | 0 |

Example 3
Effect of thickness and acetyl content of cellulose acetate overlayers

A series of chloride ion-selective electrodes was prepared as described above with overlayers of cellulose acetate of varying thickness and acetyl content, coated from acetone. An uncoated electrode was also prepared to serve as a control. The electrodes were tested in the absolute mode with adulterated and unadulterated human blood serum pools. The response time of the electrode was chosen as that time at which the potential reached a steady state, i.e., drifted at a constant rate. The results, shown in Table III, illustrate that acetyl content and thickness are interrelated in respect to achieving a desirable combination of response time and interference reduction with cellulose acetate overlayers.

TABLE III

| Percent acetyl in cellulose acetate overlayer | Overlayer thickness (microns) | Response time (minutes) | Bias (mV) 0.5 mM $Br^{\ominus}$ | 10 mg/dl uric acid |
|---|---|---|---|---|
| Bare control (no overlayer) | 0 | <1 | 7.5 | 1.5 |
| 40.0 | 5 | 8** | <1 | * |
| 40.0 | 1.25 | 2 | <1 | * |
| 40.0 (control A) | 0.125 | <2 | 8 | * |
| 39.8 | 5 | 10** | <1 | <1 |
| 39.4 | 5 | 5—10** | <1 | <1 |
| 39.4 | 1.25 | 1—2 | <1 | <1 |
| 38.8 | 5 | 1—2 | <1 | <1 |
| 37.6 | 5 | <1 | <1 | <1 |
| 37.6 | 1.25 | <1 | 3.5 | 0 |

* Not tested
** Response times are not desirable, although interference is inhibited

Example 4
Comparison of permeability of $Cl^{\ominus}$ and $Br^{\ominus}$ through cellulose and cellulose acetate layers

The permeability of chloride and bromide ions through layers of cellulose and cellulose acetate (37.6 percent acetyl) was determined by placing the halide ion in one compartment of a concentration cell and water in the second, with the compartments separated by the layer being tested. The resulting data in Table IV show that cellulose does not meet the permeability criteria for an overlayer useful according to the invention to reduce bromide interference with a chloride ion-selective device, while cellulose acetate (37.6 percent acetyl) does meet the criteria.

TABLE IV

| Overlayer composition | Permeability in $cm^2/sec$ to $Cl^\ominus$ | to $Br^\ominus$ |
|---|---|---|
| cellulose (20 $g/m^2$) | $9.2\times10^{-7}$ | $7.0\times10^{-7}$ |
| cellulose acetate (5 $g/m^2$) (37.6 percent acetyl) | $3\times10^{-9}$ | $6\times10^{-9}$ |

Example 5

Comparison of overlayers comprising methyl methacrylate and cellulose acetate

In this example, an Ag/AgCl electrode (2) coated with an overlayer according to the present invention (cellulose acetate—39.5 percent acetyl—3 microns thick) was compared with a similar electrode (3) coated with an overlayer described in Neff, U.S. Patent 3,591,482 (methyl methacrylate—25 microns thick). A 6.3-micron thick electrode overlayer (4) (within the thickness range prescribed by the present invention) of methyl methacrylate was also tested. An uncoated Ag/Ag/Cl electrode (1) served as the control. The electrodes were prepared as described previously and tested in solutions containing 100 and 160 mM $Cl^\ominus$, using the MI-401 as the reference electrode.

Plots of potential versus time for each electrode in each solution are shown in Figure 1 of the drawings. The potential for electrode (3) remained too high to be plotted within the time allowed, indicating an insufficient response time (>5 minutes). The response of electrode (4), though measurable, was too erratic during the time allowed to be of any use. Also, the plot of electrode (4) showed high potential for a 160 mM $Cl^\ominus$ solution than for a 100 mM $Cl^\ominus$ solution within the time allowed, which is the reverse of the correct relationship, as shown by the plots for electrodes (1) and (2). The plots for electrode (4) eventually crossed over each other at a time greater than 10 minutes (not shown).

These results indicate that an overlayer of methyl methacrylate, as taught by Neff, is not useful in the practice of the present invention.

Example 6

Response times of cellulose ester overcoated $Cl^\ominus$ electrode with and without polyols

A chloride electrode, made by the process of chemical conversion of Ag°, was overcoated as described above with cellulose acetate (3 $g/m^2$) having an acetyl content of 39.4 percent and a mixture of polydimethyl and polymethylphenylsiloxane (DC-510 from Dow Corning, Midland, Michigan) (0.03 $g/m^2$) as a coating aid. A second electrode was similarly coated, except polyethylene glycol 400 (0.15 $g/m^2$) (i.e., 5 percent of cellulose acetate coverage) was added to the cellulose acetate formulation. The coated electrodes were evaluated when fresh as described above using $Cl^\ominus$ concentrations of 10 to 160 mM $Cl^\ominus$ (Ionic strength equals 160 to $NaNO_3$). Figures 2 (control) and 3 (electrode of this invention) show the potential time responses of the two electrodes. The electrode containing polyethylene glycol gave a faster response time (earlier leveling off of the potential) than the control and a near-Nernstian slope providing an accurate reading of solutions less than 30 mM $Cl^\ominus$ at 3 minutes. The electrode without polyethylene glycol did not show a constant potential, even after 5 minutes.

Example 7

Comparison of fresh and aged electrodes with and without polyols

Electrodes as described in Example 6 were tested with 100 $\mu l$ drops of 100 mM $Cl^\ominus$ (Ionic strength equals 160 with $NaNO_3$) solutions when fresh and after being heated at 105°C for 10 minutes. (The heating simulated accelerated incubation or aging). Again, the electrode containing the polyol gave a faster response time when fresh and showed less change in response time upon heating, as shown in Figure 4 (a and b).

Example 8

Stability on keeping of $Cl^\ominus$ electrode by the addition of polyols.

A. The two electrodes described in Example 6 and a third electrode, prepared in a similar manner except containing 2,5-hexanediol (0.15 $g/m^2$), were incubated at various conditions of relative humidity (RH) (15 to 80 percent) and temperature (25.6° to 48.9°C) for 4 weeks. When tested as above, the electrodes without polyols (control) showed response times on the order of:

| | | | |
|---|---|---|---|
| 15% RH/25.6°C | <50% RH/25.6°C | <50% RH/48.9°C | <80% RH/25.6°C |
| (2.5 min | <3 min | <5.5 min | <~15 min) |

However, when polyols were added, both 15 and 50 percent RH/25.6°C responded at ~1.5 minutes, 50 percent RH/48.9°C responded at ~3 minutes, and 80 percent RH/25.6°C responded at about 10 minutes. These results indicate that the addition of polyols reduces degradation of the electrodes.

B. The electrodes incubated at 80 percent RH/25.6°C were re-equilibrated at ambient conditions for 5 days and then retested as above. Recovery was considerably faster in electrodes which contained the polyols, as shown in Figures 5 and 6. (Figure 5 is before re-equilibration; Figure 6 is after re-equilibration). The addition of polyols makes the electrode less sensitive to fluctuating conditions of humidity and temperature.

Example 9

Effect of polyols on interference such as $Br^{\ominus}$ and uric acid, etc.

Low molecular weight materials, such as bromide ions, uric acid, etc., are interferants in serum chloride determinations employing ion-selective electrodes. Errors (biases) as high as 50 percent can occur when interferant levels are high. The sensitivity to these interfering materials is significantly reduced by overcoating the electrode with a thin layer of cellulose ester material as described above. The addition of polyols to the cellulose formulation does not significantly alter this protection and, in fact, provides greater reproducibility on aged electrodes.

Three electrodes, as described in Table V, were tested with $Br^{\ominus}$ and uric acid adulterated serum pools, and the bias (percent) obtained from each was calculated.

TABLE V

| Electrode | Bias (percent) | | | |
|---|---|---|---|---|
| | Bromide (0.5 mM) | | Uric Acid (0.6 mM) | |
| | Fresh[a] | 11 Wks old[b] | Fresh[b] | 11 Wks old[b,c] |
| Bare | 16±2 | 16±2 | 6±0.4 | 6±0.4 |
| A (3.0 $g/m^2$ Cellulose acetate) | 4±3 | 3±15 | −2±2 | −4±3 |
| B. (3.0 $g/m^2$ Cellulose acetate+ 0.15 $g/m^2$ polyethylene glycol MW 400) | 5±2 | 7±1 | 1±2.5 | 1±0.4 |

[a] Pooled serum control (2 to 3 replicates)
[b] Blood bank pooled serum (4 replicates)
[c] Duplicate determinations

As shown in Table V, reproducibility of the eleven-week old cellulose acetate-coated electrode (A) was very poor compared to the others. As mentioned earlier, this is due to the slow response of the aged cellulose acetate-coated electrode. Table VI shows the bias (mV) obtained in four replicate tests made with each of the eleven-week old electrodes using a bromide adulterated serum.

TABLE VI

Bias (mV) of 11-week old electrodes ($Br^{\ominus}$ 0.5 mM)

| | | | | |
|---|---|---|---|---|
| Bare | −3.7 | −4.4 | −4.4 | −3.6 |
| A | 2.4 | −3.9 | 2.6 | −4.0 |
| B | −1.9 | −1.7 | −2.1 | −1.6 |

Example 10

Calibration of five-week old electrodes with and without polyols

Five electrodes prepared as described in Example 9 were overcoated as shown in Table VII. These were kept at ambient conditions (35 to 50 percent RH, 21 to 23°C) for 5 weeks and subsequently each was calibrated using 3 chloride levels of human serum calibrator. A pooled serum control was assayed, and the bias (mEq/l) was calculated from the calibrated slopes. Figures 7 and 8 show the plotted curves of the control electrode and that containing polyethylene glycol (MW 400), respectively. The control coating showed a significant lack of fit in the curve owing to the slow response time of the electrode at the lower $Cl^{\ominus}$ concentration.

TABLE VII
Calibration and assay data

| Electrode | Overcoat composition | Slope± std. error mV/dec | Pure error mEq/l | Pooled serum control bias± std. error mEq/l |
|---|---|---|---|---|
| A | Cellulose acetate (3 g/m$^2$) | −61.75±0.05 | 1.95 | 5.98±0.83 |
| B | Cellulose acetate +polyethylene glycol (MW 400) (0.15 g/m$^2$) | −52.80±0.03 | 1.78 | −4.12±3.59 |
| C | Cellulose acetate +2,5-hexanediol (0.3 g/m$^2$) | −51.76±0.02 | 0.89 | −2.86±0.95 |
| D | Cellulose acetate +2-ethyl-1,3-hexanediol (0.15 g/m$^2$) | −51.06±0.01 | 1.02 | −3.45±3.41 |
| E | Cellulose acetate +1,2,6-hexanetriol (0.15 g/m$^2$) | −50.87±0.02 | 1.67 | −1.91±1.18 |

**Claims**

1. A potentiometric device for the selective detection of a single halide ion species in a solution, said device comprising: (1) a layer of silver halide in electrochemical contact with means for making potentiometric measurements related to halide ion concentration, and (2) an overlayer superposed on said layer of silver halide, characterized in that said overlayer:

(a) has a dry thickness of 1 to 8 microns thick;
(b) has a diffusion coefficient of at least $2.5 \times 10^{-2}$ $cm^2$/sec with respect to the halide ion species to be detected; and
(c) has a permeability of less than $2 \times 10^{-8}$ $cm^2$/sec to materials which could interfere with said detection of halide ion species;

whereby said halide ion-permeable overlayer is capable of inhibiting interference due to the presence of one or more of said interfering materials in said solution, and said potentiometric device is capable of accurately carrying out said detection of said halide ion species within 5 minutes after a portion of said solution is brought into contact with said overlayer.

2. The potentiometric device of claim 1, wherein said overlayer consists essentially of a composition selected from the group consisting of:

(a) cellulose esters;
(b) polymers polymerized from 45 weight percent to 100 weight percent of at least one monomer having the structure:

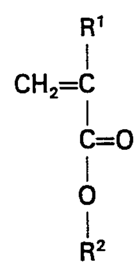

where
$R^1$ is hydrogen or methyl;
$R^2$ is hydrogen, —$R^3$—OH or

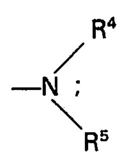

$R^3$ is alkyl of 1—5 carbon atoms; and
$R^4$ and $R^5$ are independently selected from the group consisting of hydrogen and alkyl of 1—5 carbon atoms; and
(c) mixtures of gelatin, silver halide/gelatin emulsion, and an acid.

3. The device of claims 1 or 2 wherein said overlayer comprises a cellulose ester and a polyol containing from 2 to 6 hydroxyl groups.

4. The device of Claim 3 wherein the polyol is a diol, triol, polyethylene glycol, alkoxypolyethylene glycol or polypropylene glycol.

5. The device of Claim 4 wherein the polyol is selected from the group consisting of diols having chain lengths of from 4 to 10 carbon atoms, polyethylene glycols having molecular weights of between 100 and 6,000 polypropylene glycols having molecular weights less than 1,100.

6. The device of Claim 3 wherein the polyol is selected from the group consisting of ethylene glycol, 1,2-propanediol, 1,3-butanediol, 1,5-pentanediol, 2,5-hexanediol, 2-ethyl-1,3-hexanediol, 1,7-heptanediol, 1,8-octanediol, 1,10-decanediol, 1,14-tetradecanediol, glycerol, 1,3,6-hexanetriol, methoxy polyethylene glycol and 1,2,4-butanetriol.

7. The device of Claims 1—6 wherein said overlayer comprises a composition selected from the group consisting of:

(a) cellulose acetic having from about 36.5 weight percent to 40.0 weight percent acetyl content;
(b) poly(acrylamide - co - methacrylic acid) (weight ratio: 45/55);
(c) poly(methacrylamide - co - methacrylic acid) (weight ratio: 50/50);
(d) poly(methacrylamide - co - 2 - hydroxyethylmethacrylate - co - methacrylic acid - co - 2 - acetoacetoxyethylmethacrylate) (weight ratio: 28/28/34/10);
(e) poly(methacrylic acid);
(f) poly(acrylic acid); and
(g) poly(2-hydroxyethylacrylate).

8. The device of Claims 1—7 wherein said halide ion species represents chloride ions and said silver halide is silver chloride.

9. The device of Claims 1—8 wherein said overlayer contains a surfactant.

10. The device of Claims 1—9 wherein said means for making potentiometric measurements comprises a doped silicon support having a silicon dioxide layer superposed thereon.

11. The device of Claims 1—9 wherein the layer of silver halide is superposed on and in electrochemical contact with a layer of silver thereby forming a halide ion-sensitive electrode.

**Patentansprüche**

1. Potentiometrisches Meßgerät für die Bestimmung einer einzelnen Halogenidionenart in einer Lösung mit (1) einer Schicht aus Silberhalogenid in elektrochemischem Kontakt mit Mitteln für die Durchführung von potentiometrischen Messungen, die mit der Halogenidionenkonzentration in Beziehung stehen und (2) einer auf die Silberhalogenidschicht aufgebrachten Deckschicht, dadurch gekennzeichnet, daß die Deckschicht:

(a) eine Trockendichte von 1 bis 8 Mikron hat;
(b) einen Diffusionskoeffizienten von mindestens $2{,}5 \times 10^{-10} cm^2/Sek.$ bezüglich der zu ermittelnden Halogenidionenart aufweist und
(c) einen Permeabilität gegenüber Stoffen, die die Bestimmung der Halogenidionenart stören könnten, von weniger als $2 \times 10^{-8} cm^2/Sek.$ aufweist,

wobei gilt, daß die für Halogenidionen permeable Deckschicht eine Störung aufgrund des Vorhandenseins von einem oder mehreren störenden Stoffen in der Lösung zu unterbinden vermag und das potentiometrische Meßgerät genaue Halogenidionenartbestimmungen innerhalb von 5 Minuten, nachdem ein Teil der Lösung in Kontakt mit der Deckschicht gebracht worden ist, durchzuführen vermag.

2. Potentiometrisches Meßgerät nach Anspruch 1, in dem die Deckschicht im wesentlichen besteht aus einer Masse, ausgewählt aus Stoffen bestehend aus:

(a) Celluloseestern;
(b) Polymeren, hergestelt durch Polymerisation von 45 Gew.-% bis 100 Gew.-% von mindestens einem Monomeren der Formel:

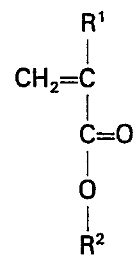

worin bedeuten:

$R^1$ ein Wasserstoffatom oder einen Methylrest;

$R^2$ ein Wasserstoffatom, einen Rest der Formel —$R^3$—OH oder einen Rest der Formel

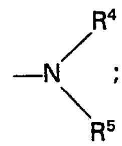

$R^3$ einen Alkylrest mit 1 bis 5 Kohlenstoffatomen und

$R^4$ und $R^5$ unabhängig voneinander jeweils ein Wasserstoffatom oder einen Alkylrest mit 1 bis 5 Kohlenstoffatomen und

(c) Mischungen von Gelatine, einer Silberhalogenid-/Gelantine-emulsion und einer Säure.

3. Meßgerät nach Ansprüchen 1 oder 2, in dem die Deckschicht einen Celluloseester und ein Polyol mit 2 bis Hydroxylgruppen aufweist.

4. Meßgerät nach Anspruch 3, in dem das Polyol ein Diol, Triol, Polyethylenglykol, Alkoxypolyethylenglykol oder Polypropylenglykol ist.

5. Meßgerät nach Anspruch 4, in dem das Polyol ausgewählt ist aus Diolen mit einer Kettenlänge von 4 bis 10 Kohlenstoffatomen, Polyethylenglykolen mit Molekulargewichten von 100 bis 6000 und Polypropylenglykolen mit Molekulargewichten von weniger als 1100.

6. Meßgerät nach Anspruch 3, in dem das Polyol ausgewählt ist aus einer Gruppe von Verbindungen bestehend aus Ethylenglykol; 1,2-Propandiol; 1,3-Butandiol; 1,5-Pentandiol; 2,5-Hexandiol; 2-Ethyl-1,3-hexandiol; 1,7-Heptandiol; 1,8-Octandiol; 1,10-Decandiol; 1,14-Tetradecandiol; Glyzerin; 1,3,6-Hexantriol; Methoxypolyethylenglykol und 1,2,4-Butantriol.

7. Meßgerät nach Ansprüchen 1 bis 6, in dem die Deckschicht eine Masse aufweist, die ausgewählt ist aus der Gruppe bestehend aus:

(a) Celluloseacetat mit einem Acetylgruppengehalt von 36,5 Gew.-% bis 40,0 Gew.-%;
(b) Poly(acrylamid - co - methacrylsäure) (Gewichtsverhältnis: 45/55);
(c) Poly(methacrylamid - co - methacrylsäure) (Gewichtsverhältnis: 50/50);
(d) Poly(methacrylamid - co - 2 - hydroxyethyl - methacrylat - co - methacrylsäure - co - 2 - acetoacetoxyethylmethacrylat) (Gewichtsverhältnis: 28/28/34/10);
(e) Poly(methacrylsäure);
(f) Poly(acrylsäure) und
(g) Poly(2-hydroxyethylacrylat).

8. Meßgerät nach Ansprüchen 1 bis 7, in dem die Halogenidionenart Chloridionen sind und das Silberhalogenid Silberchlorid.

9. Meßgerät nach Ansprüchen 1 bis 8, in dem die Deckschicht eine oberflächenaktive Verbindung enthält.

10. Meßgerät nach Ansprüchen 1 bis 9, in dem die Mittel für die Durchführung potentiometrischer Messungen einen dotierten Siliciumträger mit einer hierauf aufgetragenen Siliciumdioxidschicht aufweisen.

11. Meßgerät nach Ansprüchen 1 bis 9, in dem die Schicht aus Silberhalogenid auf eine Silberschicht aufgebracht ist und sich in elektrisch-chemischem Kontakt hiermit befindet und dadurch eine für Halogenidionen sensitive Elektrode bildet.

## Revendications

1. Dispositif potentiométrique pour la détection sélective d'un ion halogénure spécifique en solution, ce dispositif comprenant: 1) une couche d'halogénure d'argent en contact électrochimique avec des moyens de mesure potentiométrique en relation avec la concentration en ion halogénure, et 2) superposée à cette couche, une surcouche, caractérisé en ce que la surcouche:

1) a une épaisseur à l'état sec comprise entre 1 $\mu$m et 8 $\mu$m
2) a un coefficient de diffusion d'au moins $2,5 \times 10^{-10}$ $cm^2/s$ pour l'ion halogénure spécifique à détecter,
3) a une perméabilité inferieure à $2 \times 10^{-8}$ $cm^2/s$ pour les substances qui pourraient interférer avec la détection d'ion halogénure,

la dite surcouche ayant la capacité d'empêcher des interférences dues à la présence d'une ou de plusieurs substances interférentes dans la dite solution, et le dit dispositif potentiométrique pouvant détecter avec précision le dit ion halogénure dans les 5 minutes suivant la mise en contact d'un échantillon de solution avec la dite surcouche.

2. Dispositif potentiométrique conforme à la revendication 1, dans lequel la dite surcouche est constituée principalement d'une composition choisie dans le groupe formé par:

a) des esters cellulosiques,
b) des polymères résultant de la polymérisation de 45/100 à 100/100 en masse d'au moins un monomère ayant la structure:

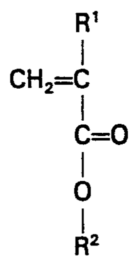

où $R^1$ est un atome d'hydrogène ou le radical méthyle,
$R^2$ est un atome d'hydrogène, un groupe $—R^3—OH$ ou

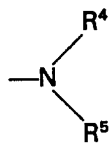

$R^3$ est un radical alkyle de 1 à 5 atomes de carbone,
$R^4$ et $R^5$ sont choisis indépendamment dans le groupe formé par un atome d'hydrogène et un radical alkyle de 1 à 5 atomes de carbone, hydrogène, et,
c) des mélanges de gélatine, d'une émulsion au gélatino-halogénure d'argent, et d'un acide.

3. Dispositif conforme aux revendications 1 ou 2, dans lequel la surcouche est formée d'un ester cellulosique et d'un polyol contenant de 2 à 6 groupes hydroxyle.

4. Dispositif conforme à la revendication 3, dans lequel le polyol est un diol, un triol, un polyéthylèneglycol, un alkoxy-polyéthylèneglycol ou un polypropylèneglycol.

5. Dispositif conforme à la revendication 4, dans lequel le polyol est choisi dans le groupe formé par les diols dont la longueur de chaîne est de 4 à 10 atomes de carbone, les polyéthylèneglycols ayant des poids moléculaires compris entre 100 et 6000, et les polypropylèneglycols ayant des poids moléculaires inférieurs à 1100.

6. Dispositif conforme à la revendication 3, dans lequel le polyol est choisi dans le groupe formé par l'éthylèneglycol, le 1,2-propanediol, le 1,3-butanediol, le 1,5-pentanediol, le 2,5-hexanediol, le 2-éthyl-1,3-hexanediol, le 1,7-heptanediol, le 1,8-octanediol, le 1,10-décanediol, le 1,14-tétradécanediol, le glycérol, le 1,3,6-hexanetriol, le méthoxy polyéthyèneglycol et le 1,2,4-butanetriol.

7. Dispositif conforme aux revendications 1 à 6, dans lequel la surcouche est formée d'une composition choisie dans le groupe constitué par:

a) de l'acétate de cellulose dont la teneur en acétyle est comprise entre environ 365/1000 en masse et 400/1000 en masse.
b) un copolymère d'acrylamide et d'acide méthacrylique (rapport en masse: 45/55),
c) un copolymère de méthacrylamide et d'acid méthacrylique (rapport en masse: 50/50),
d) un copolymère de méthacrylamide, de méthacrylate de 2-hydroxyéthyle, d'acide méthacrylique et de méthacrylate de 2-acétoacétoxyéthyle, (rapport en masse: 28/28/34/10),
e) l'acide polyméthacrylique,
f) l'acide polyacrylique, et
g) le polyacrylate de 2-hydroxyéthyle.

8. Dispositif des revendications 1 à 7, dans lequel l'ion halogénure représente des ions chlorures, et l'halogénure d'argent est du chlorure d'argent.

9. Dispositif des revendications 1 à 8, dans lequel la surcouche contient un agent tensioactif.

10. Dispositif des revendications 1 à 9, dans lequel les moyens de mesure potentiométrique sont formés d'un support de silicium dopé sur lequel est appliquée une couche de dioxyde de silicium.

11. Dispositif des revendications 1 à 9, dans lequel la couche d'halogénure d'argent est superposée à une couche d'argent, et en contact électrochimique avec elle, formant ainsi une électrode sensible aux ions halogénures.

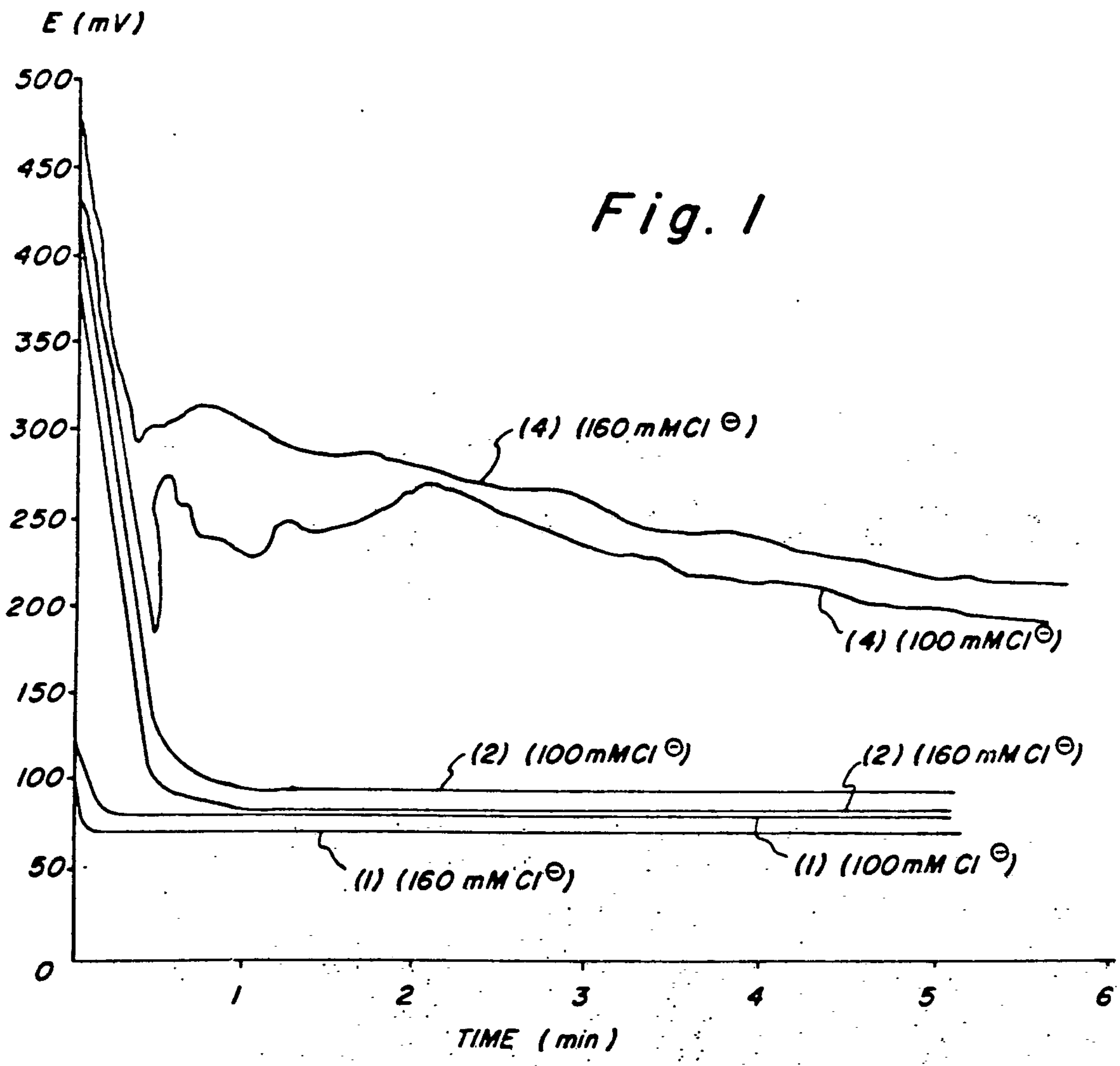
E (mV)
500
450
400
350
300
250
200
150
100
50
0
1
2
3
4
5
6
TIME (min)
(4) (160 mMCl ⊖)
(4) (100 mMCl ⊖)
(2) (100mMCl ⊖)
(2) (160 mMCl ⊖)
(1) (160 mM Cl ⊖)
(1) (100mM Cl ⊖)

Fig. 1

Fig. 2

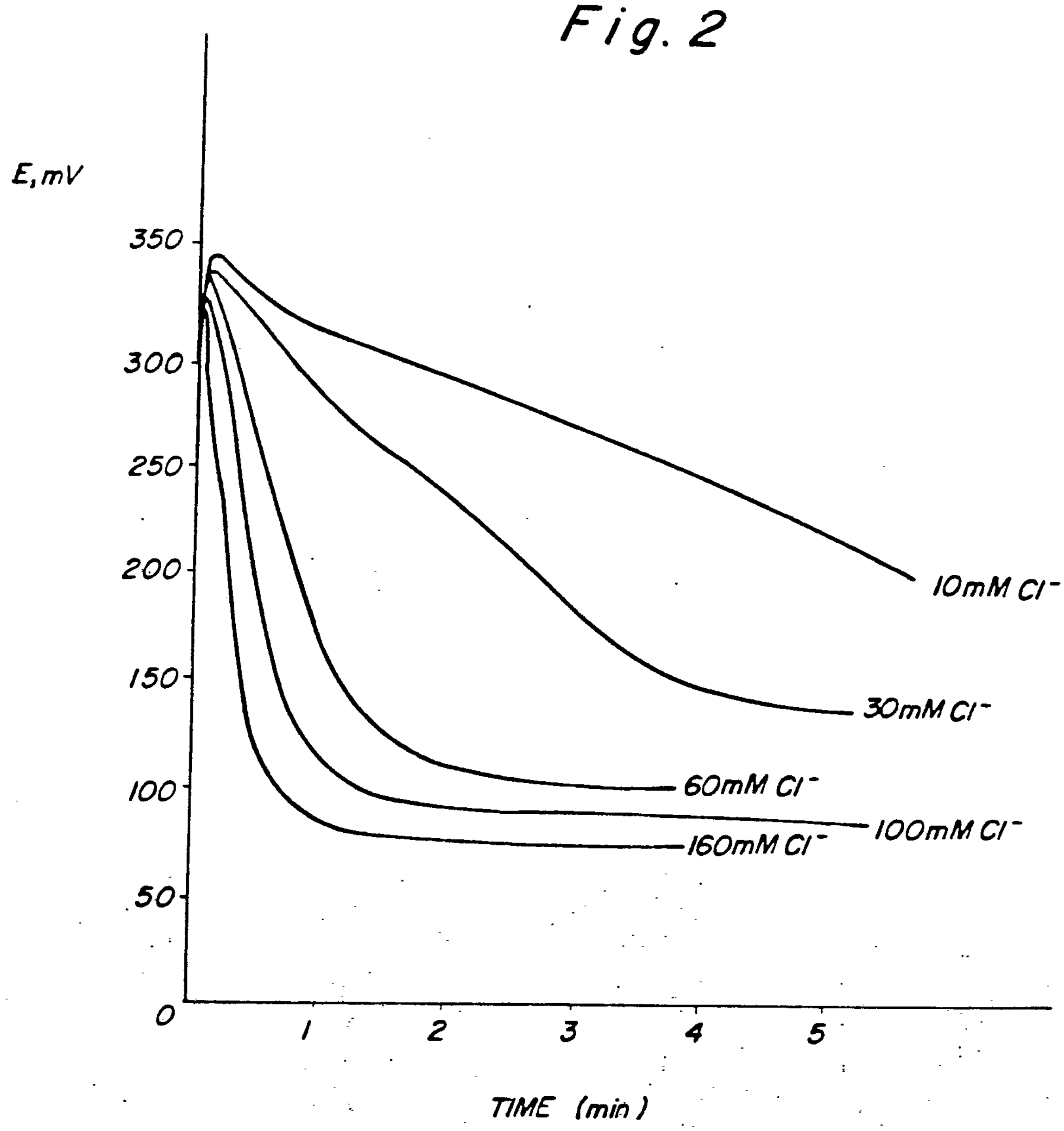
E, mV
350
300
250
200
150
100
50
0
1
2
3
4
5
TIME (min)
10mM Cl⁻
30mM Cl⁻
60mM Cl⁻
100mM Cl⁻
160mM Cl⁻

Fig. 3

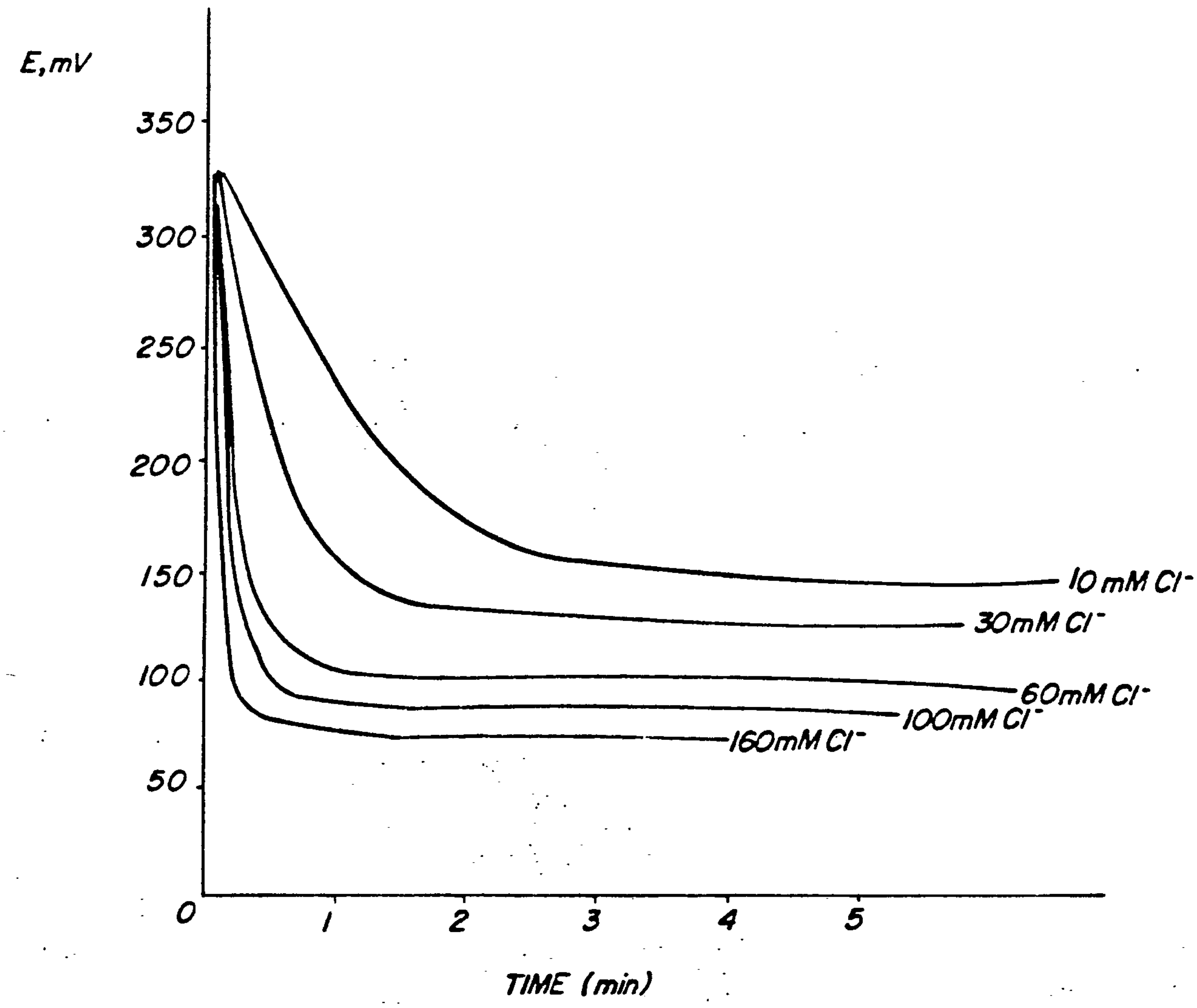
E, mV
350
300
250
200
150
100
50
0
1
2
3
4
5
TIME (min)
10 mM Cl⁻
30mM Cl⁻
60mM Cl⁻
100mM Cl⁻
160mM Cl⁻

Fig. 4a

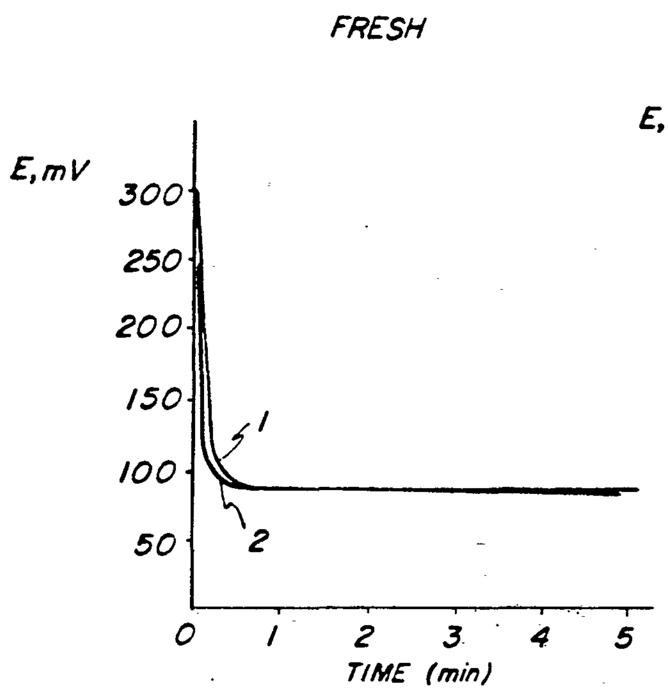
FRESH
E, mV
300
250
200
150
100
50
1
2
0
1
2
3
4
5
TIME (min)

Fig. 4b

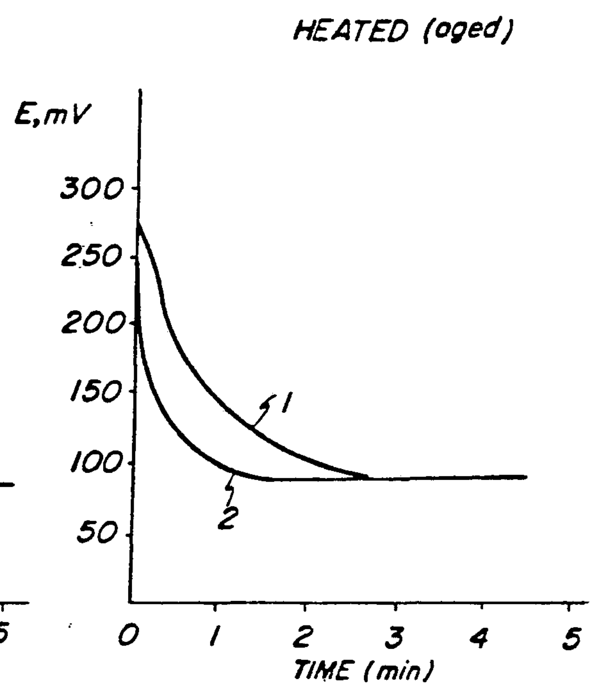
HEATED (aged)
E, mV
300
250
200
150
100
50
1
2
0
1
2
3
4
5
TIME (min)

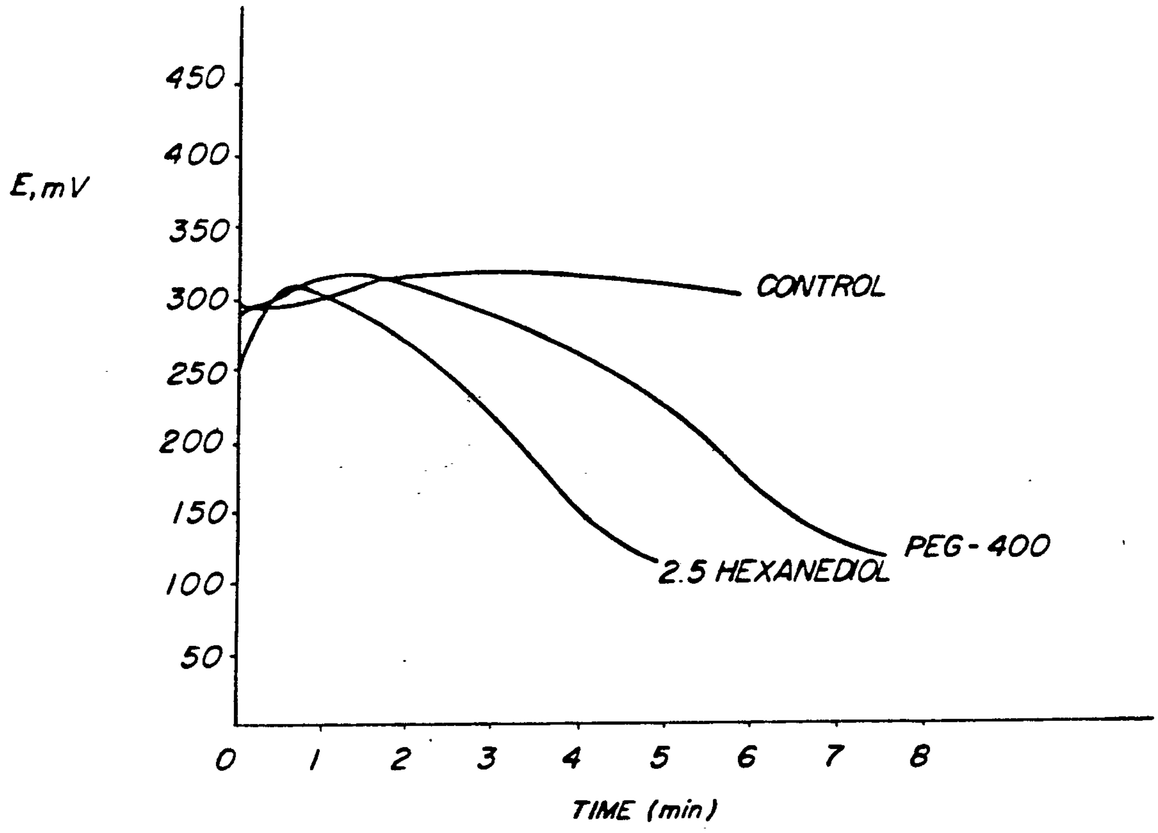
E, mV
450
400
350
300
250
200
150
100
50
0
1
2
3
4
5
6
7
8
TIME (min)
CONTROL
PEG-400
2.5 HEXANEDIOL

Fig. 5

AFTER REEQUILIBRATION (5 DAYS) AT
AMBIENT CONDITIONS

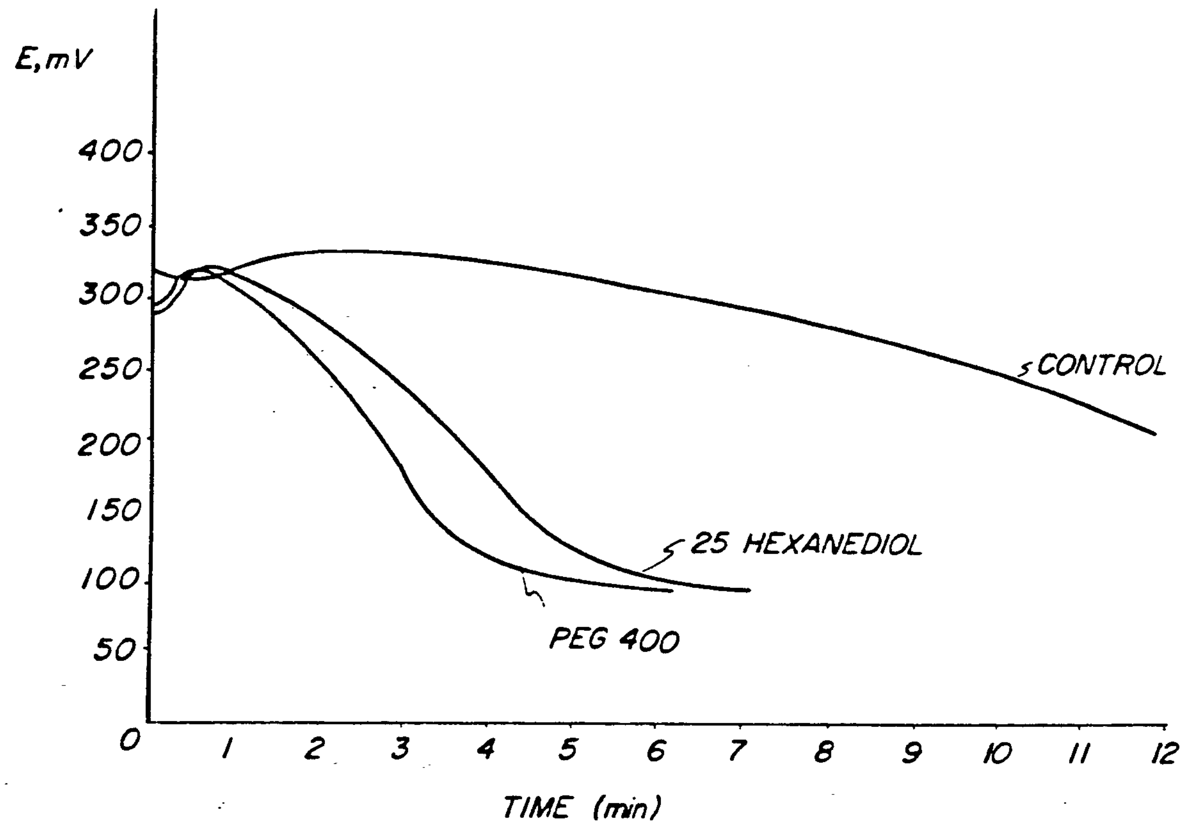


Fig. 6

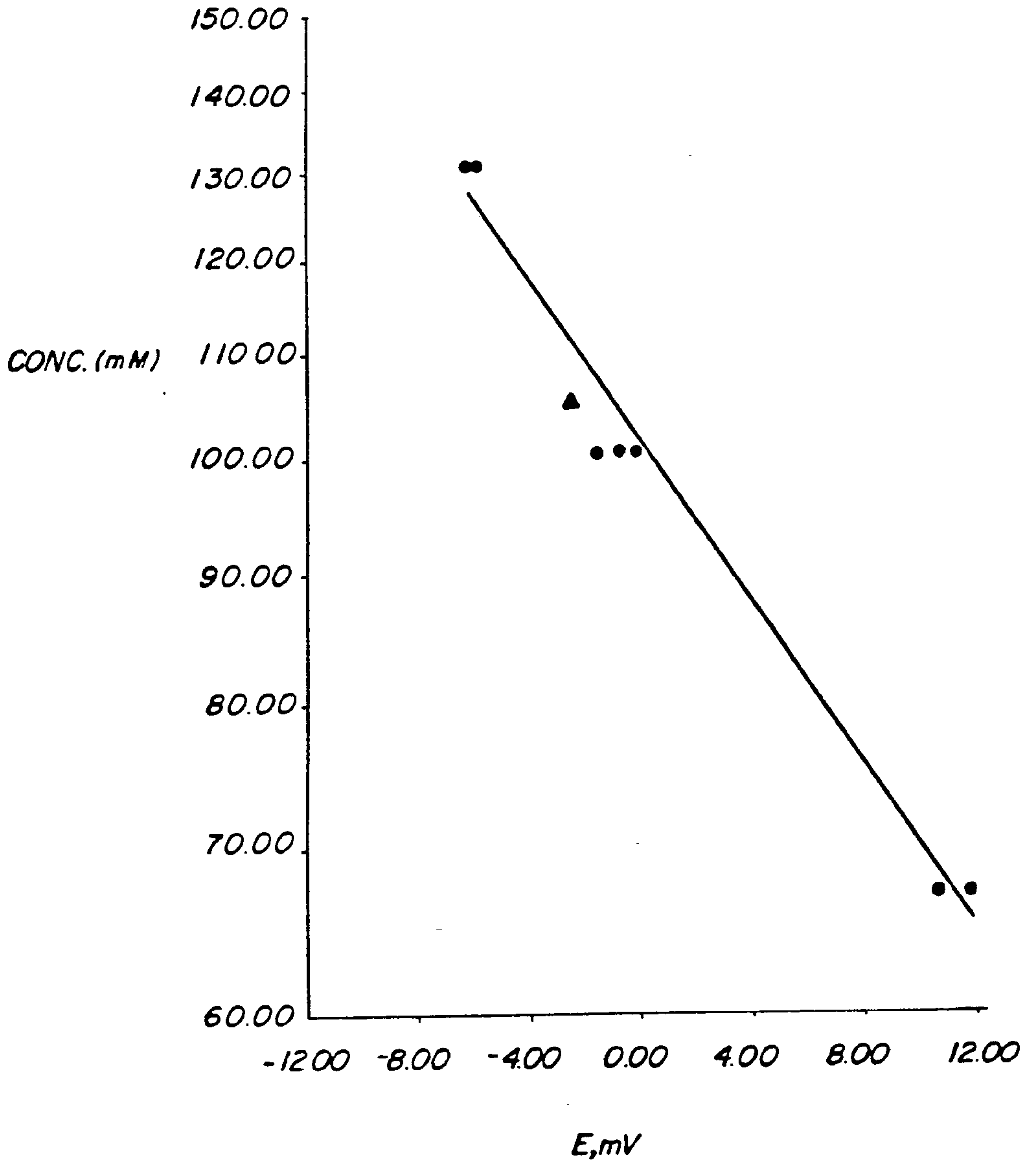
150.00
140.00
130.00
120.00
CONC. (mM)
110.00
100.00
90.00
80.00
70.00
60.00
-12.00
-8.00
-4.00
0.00
4.00
8.00
12.00
E,mV

Fig.7

Fig. 8

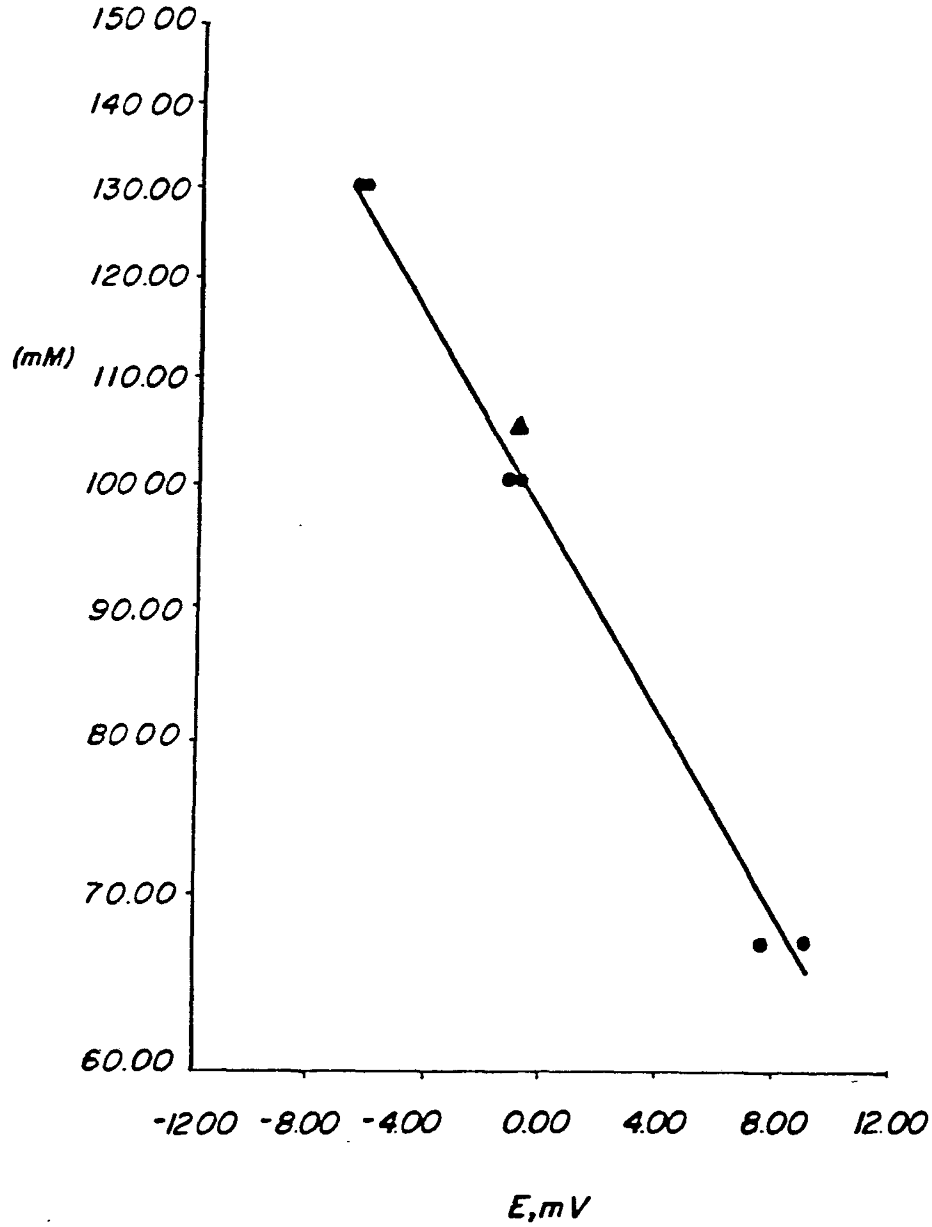
150 00
140 00
130.00
120.00
(mM)
110.00
100 00
90.00
80 00
70.00
60.00
-12 00
-8.00
-4.00
0.00
4.00
8.00
12.00
E,mV